# EUROPÄISCHE PATENTANMELDUNG

(11) **EP 2 078 772 A2**
(43) Veröffentlichungstag der Anmeldung: **15.07.2009**
(21) Anmeldenummer: 08021233.5
(22) Anmeldetag: 05.12.2008
(51) Int. Cl.: D03D 3/04

(54) **Transportband, insbesondere für eine Textilverarbeitungsmaschine**

(30) Priorität: 09.01.2008 DE 102008003686
(71) Anmelder: Kannegiesser Garment & Textile Technologies GmbH + Co., 32602 Vlotho (DE)
(72) Erfinder: Mücke, Ralf, 32791 Lage (DE)
(74) Vertreter: Sties, Jochen

(57) **Zusammenfassung**

Ein Transportband (10), insbesondere für eine Textilverarbeitungsmaschine, mit einem Schlauchgewebe (14) und einer Beschichtung (20), wobei die Kettfäden (16) des Schlauchgewebes (14) quer zur Laufrichtung (L) des Transportbandes (10) und die Schußfäden (18) längs zur Laufrichtung (L) des Transportbandes (10) liegen, ist dadurch gekennzeichnet, daß die Kettfäden (16) aus Glasfasergarn bestehen und die Schußfäden (18) aus Aramidfasergarn.

## Beschreibung

Die Erfindung betrifft ein Transportband, insbesondere für eine Textilverarbeitungsmaschine, mit einem Schlauchgewebe und einer Beschichtung, wobei die Kettfäden des Schlauchgewebes quer zur Laufrichtung des Transportbandes und die Schußfäden längs zur Laufrichtung des Transportbandes liegen.

Das Transportband ist Teil einer Maschine, mit der Textilstücke miteinander verklebt werden, beispielsweise ein Oberstoff mit einer Verstärkungslage. Die Textilstücke können dann zu Kleidungsstücken weiterverarbeitet werden oder auch zu Sitzbezügen. Das Transportband dient dazu, die Textilstücke flach ausgebreitet zu einer Station zu transportieren, in der sie Druck und Wärme ausgesetzt sind, so daß ein aufgebrachter Klebstoff aktiviert wird. Wesentlich für eine gute Verklebung ist, daß das Transportband eine ebene Oberfläche aufweist, also in Querrichtung keine Wellen und in Längsrichtung keinen Stoß.

Transportbänder ohne Stoß werden auf der Basis eines schlauchförmigen Gewebes hergestellt. Dieses Gewebe kann aus Glasfasergarn oder Aramidfasergarn bestehen. Von dem Gewebe wird ein Abschnitt verwendet, der dann beschichtet wird. Daher liegen beim fertigen Transportband die Kettfäden des Schlauchgewebes quer zur Laufrichtung des Transportbandes und die Schußfäden längs zur Laufrichtung. Da der Schlauchabschnitt, in der Bewegungsrichtung des Transportbandes gesehen, "endlos" ist, weist das Transportband keinen Stoß auf.

Bei Transportbändern, deren tragendes Gewebe aus Glasfasern besteht, hat sich aber herausgestellt, daß die Längszugfestigkeit und die Biegeelastizität nicht zufriedenstellend sind. Bei Transportbändern, deren tragendes Gewebe aus Aramidfasern besteht, hat sich aber herausgestellt, daß die Querstabilität unzureichend ist, so daß es zu schädlicher Wellenbildung kommt.

Die Aufgabe der Erfindung besteht darin, ein Transportband zu schaffen, das sich durch eine gute Haltbarkeit und eine hohe Flächenstabilität auszeichnet.

Zur Lösung dieser Aufgabe ist bei einem Transportband der eingangs genannten Art vorgesehen, daß die Kettfäden aus Glasfasergarn bestehen und die Schußfäden aus Aramidfasergarn. Ein solches Transportband weist aufgrund der Aramidfasern eine hohe Festigkeit in Längsrichtung und eine hohe Biegeelastizität auf, während die Glasfasern für eine hohe Stabilität in Querrichtung sorgen. Dies gewährleistet eine hohe, gleichmäßige Verklebungsqualität bei einer längeren Lebensdauer.

Gemäß einer bevorzugten Ausführungsform der Erfindung ist vorgesehen, daß die Kettfäden aus multifilem Glasfasergarn bestehen. Weiterhin ist vorzugsweise vorgesehen, daß die Schußfäden aus multifilem Aramidfasergarn bestehen. Durch die Verwendung von multifilen Garnen ergeben sich im Vergleich mit einem monofilen Garn eine höhere Festigkeit und eine glattere Oberfläche des Gewebes.

Vorzugsweise besteht die Beschichtung des Transportbandes aus PTFE. Auf diese Weise ist das Transportband haftmassenabweisend.

Um eine elektrostatische Aufladung des Transportbandes zu vermeiden, kann gemäß einer bevorzugten Ausführungsform der Erfindung vorgesehen sein, daß die Beschichtung mit antistatisch wirkenden Partikeln versehen ist, insbesondere mit Carbonpartikeln.

Vorzugsweise ist dabei vorgesehen, daß die Oberfläche der Beschichtung durch eine PTFE-Schicht gebildet ist, die frei von Carbonpartikeln ist. Auf diese Weise wird verhindert, daß sich auf der Oberfläche des Transportbandes freie Carbonpartikel befinden, welche die auf das Transportband aufgelegten Textilstücke verschmutzen könnten.

Die Erfindung wird nachfolgend anhand einer Ausführungsform beschrieben, die in den beigefügten Zeichnungen dargestellt ist. In diesen zeigen:
- Figur 1 in einer perspektivischen Ansicht ein erfindungsgemäßes Transportband;
- Figur 2 einen Abschnitt des im Transportband verwendeten Gewebes; und
- Figur 3 einen schematischen Schnitt durch das Transportband.

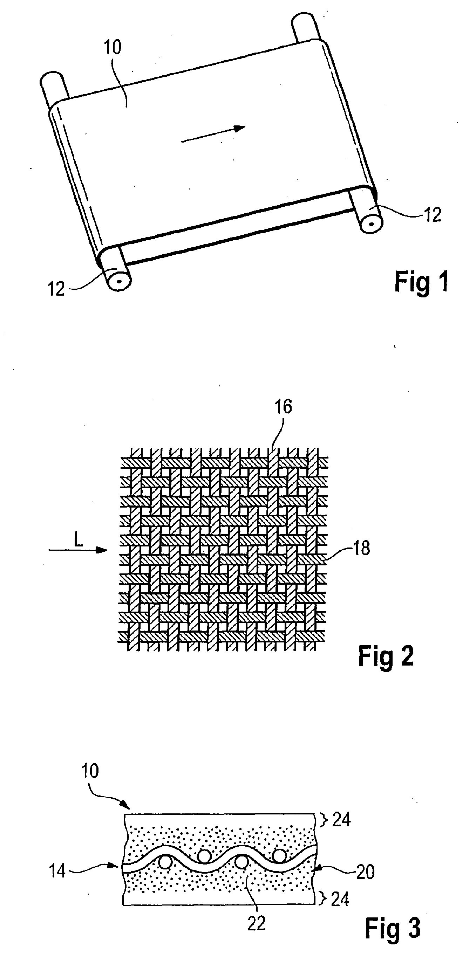

In Figur 1 ist schematisch ein Transportband 10 gezeigt, das von zwei Walzen 12 geführt ist. Das Transportband 10 bewegt sich um die Walzen in einer mit einem Pfeil angedeuteten Laufrichtung L. Mit dem Transportband 10 werden Textilstücke, die auf diesem ausgebreitet werden, durch eine Verklebestation einer nicht gezeigten Textilverarbeitungsmaschine transportiert. Für eine qualitativ hochwertige Verklebung ist es wichtig, daß das Transportband eine ebene Oberfläche hat, also keine Wellen in Querrichtung oder Stöße.

Das Transportband 10 weist als tragende Struktur ein Gewebe 14 (siehe Figur 3) auf, das mit einer Beschichtung 20 versehen ist. Das Gewebe 14 ist schlauchartig und erstreckt sich somit "endlos" entlang dem gesamten Transportband 10. Es wird hergestellt, indem von einem schlauchförmig gewebtem Gewebeteil ein Abschnitt abgeschnitten und anschließend mit der Beschichtung 20 versehen wird. Aufgrund dieser Herstellungsart liegen beim fertigen Transportband 10 die Kettfäden 16 des Schlauchgewebes quer zur Laufrichtung L und die Schußfäden 18 längs zur Laufrichtung L (siehe Figur 2).

Beim erfindungsgemäßen Transportband 10 bestehen die Kettfäden 16 aus multifilem Glasfasergarn, während die Schußfäden 18 aus multifilem Aramidfasergarn bestehen. Die Beschichtung 20 besteht aus PTFE, wobei die Beschichtung 20 mit Carbonpartikeln 22 angereichert ist, die antistatisch wirken. Wie in Figur 3 zu sehen ist, ist der mit Carbonpartikeln angereicherte Bereich des Beschichtung 20 mit einer weiteren PTFE-Schicht 24 versiegelt, die keine Carbonpartikeln enthält. Dies gewährleistet, daß sich auf der Oberfläche des Transportbandes 10 keine freien Carbonpartikel befinden.

## Patentansprüche

1. Transportband (10), insbesondere für eine Textilverarbeitungsmaschine, mit einem Schlauchgewebe (14) und einer Beschichtung (20), wobei die Kettfäden (16) des Schlauchgewebes (14) quer zur Laufrichtung (L) des Transportbandes (10) und die Schußfäden (18) längs zur Laufrichtung (L) des Transportbandes (10) liegen, **dadurch gekennzeichnet, daß** die Kettfäden (16) aus Glasfasergarn bestehen und die Schußfäden (18) aus Aramidfasergam.

2. Transportband nach Anspruch 1, **dadurch gekennzeichnet, daß** die Kettfäden (16) aus multifilem Glasfasergarn bestehen.

3. Transportband nach Anspruch 1 oder Anspruch 2, **dadurch gekennzeichnet, daß** die Schußfäden (18) aus multifilem Aramidfasergarn bestehen.

4. Transportband nach einem der vorhergehenden Ansprüche, **dadurch gekennzeichnet, daß** die Beschichtung (20) aus PTFE besteht.

5. Transportband nach einem der vorhergehenden Ansprüche, **dadurch gekennzeichnet, daß** die Beschichtung (20) mit antistatisch wirkenden Partikeln (22) versehen ist, insbesondere Carbonpartikeln.

6. Transportband nach Anspruch 5, **dadurch gekennzeichnet, daß** die Oberfläche der Beschichtung (20) durch eine PTFE-Schicht (24) gebildet ist, die frei von den antistatisch wirkenden Partikeln (22) ist.
